# EUROPEAN PATENT APPLICATION

(11) **EP 3 879 085 A1**
(43) Date of publication of application: **15.09.2021**
(21) Application number: 21162401.0
(22) Date of filing: 12.03.2021
(51) Int. Cl.: F01N 3/023, F01N 3/025, F01N 9/00

(54) **AN ELECTRONIC ENGINE MANAGEMENT SYSTEM AND METHOD FOR A TRUCK MOUNTED FORKLIFT**

(30) Priority: 12.03.2020 GB 202003607
(71) Applicant: Cargotec Engineering Ireland Limited, Dundalk County, Louth (IE)
(72) Inventor: Turnbull, Kevin, Dundalk, County Louth (IE); McCabe, Tomás, Dunleer, County Louth A92 K5W4 (IE)
(74) Representative: O'Connor, Michael Donal

(57) **Abstract**

This invention relates to an electronic engine management system (3) and method for a truck mounted forklift (TMFL) (100). The TMFL electronic engine management system (EEMS) comprises a processor (4(a)) and a memory 4(b) having computer program instructions loaded thereon. The computer program instructions, when executed by the processor, cause the EEMS to (i) determine when the amount of particulate matter (PM) in the diesel particulate filter (DPF) (13) is above a first predetermined level, PL1; (ii) latch the engine (1) into a DPF regeneration mode, causing the engine to automatically enter DPF regeneration mode each time the engine is turned on until the PM level is below a first regenerated level, RL1; and (iii) unlatch the engine from DPF regeneration mode once the amount of PM in the DPF is below RL1. In this way, the majority of DPF regeneration will be carried out in an active level 2 regeneration mode, avoiding the likelihood of carrying out regeneration at higher regeneration levels.

## Description

### Introduction

This invention relates to an electronic engine management system (EEMS) and method of operating an EEMS for a truck mounted forklift (TMFL). More specifically, the invention relates to an EEMS and associated method for performing diesel particulate filter (DPF) regeneration.

Since 2019, all European non-road mobile machinery (NRMM) are subject to European Union (EU) regulation 2016/1628 governing exhaust emissions. The directive sets limits for the oxides of nitrogen (NOx), non-methane hydrocarbons (NMHC) and particulate matter (PM) that may be present in the exhaust emissions of those vehicles. PM are the minute solid particles and liquid particles that form during the combustion process and can be seen by the naked eye as smoke or soot.

In order to comply with the regulation, it is necessary for those NRMM with diesel engines to have a diesel particulate filter (DPF). A DPF is a ceramic filter that captures and stores exhaust PM in order to reduce the emissions of the engine. Due to the fact that the DPF only has a finite capacity, the trapped PM has to be periodically emptied or "burned off" to regenerate the DPF. This process is typically referred to as regeneration. The regeneration process requires the machine to achieve very high temperatures within the DPF in order to burn off the PM.

Depending on the amount of PM in the DPF, the regeneration may be carried out in a number of different ways, commonly referred to as levels. Generally speaking, the more PM there is in the DPF, the higher the level of regeneration process there will be. At very low levels of PM in the DPF, the heat from the general use of the engine is relied upon to burn off the PM whereas at very high levels of PM in the DPF, more aggressive techniques up to and including the use of specialised service tools are required to remove excess PM. Depending on the level of regeneration required, machine operation and exhaust gas temperature may be significantly altered.

However, there is a problem with the known EEMSs and the methods of operating same. Due to the idiosyncrasies of TMFLs, the known systems and methods are unsatisfactory. For example, in order for the DPF to effectively burn off PM, it is necessary for the DPF to get up to a temperature of the order of 650°C. Typically, it will take approximately 30 minutes of operating time to get the DPF up to that temperature. However, due to the very nature of TMFLs, the TMFL is seldom, if ever, in use sufficiently long enough during normal operation for the DPF to get up to that temperature.

TMFLs are transported to customer's premises on the rear of a trailer or artic chassis and are used for loading and unloading goods to and from the trailer or artic chassis once on site at the customer's premises. The TMFL is then loaded back onto the trailer before being carried to the next customer's premises. Accordingly, these TMFL machines typically have an operational cycle of approximately 10 minutes or less. This amount of time is insufficient to get the DPF up to a temperature suitable for burning off PM in the DPF during normal operation. As a consequence, the problem of PM build-up is even further compounded in TMFLs.

Secondly, due to the fact that the lower levels of DPF regeneration that rely on high operating temperatures during normal operation of the machine are largely inappropriate in TMFLs, it is necessary to use higher levels of DPF regeneration in TMFLs more frequently than would otherwise be the case. These higher levels of DPF regeneration result in higher exhaust temperatures. However, as the TMFL will often operate in confined spaces and/or in the proximity of personnel or combustible materials, it is not always desirable or possible to have higher exhaust gas temperatures. Furthermore, it is essential to provide the operator of the TMFL with the ability to deactivate the DPF regeneration process in order to avoid incident. As will be appreciated, this functionality leads to significant difficulties as it is common for the DPF regeneration to be postponed, leading to even higher build-up of PM in the DPF and ultimately requiring even more aggressive regeneration levels to be undertaken in due course.

Finally, some of the higher levels of DPF regeneration require the TMFL to be parked and inoperable for a prolonged period of time, for 50 minutes or so, while the engine is revved at high revolutions. Due to the nature of TMFLs, it is undesirable and inefficient to have them in a lengthy regeneration cycle and inoperable for prolonged periods of time.

There are a number of known EEMSs and methods for performing DPF regeneration. For example, Korean Patent Application Publication No. KR20160053306 in the name of Hyundai Construction Equipment Company Limited, United States Patent Application Publication No. US2013/227933 in the name of Caterpillar Inc., European Patent Application Publication Nos. EP2672083 and EP3263858 both in the name of Kubota KK, and PCT Patent Application Publication No. WO94/16204 in the name of Donaldson Company Inc., all disclose methods of performing DPF regeneration of working machinery. However, none of the known EEMSs and methods are entirely satisfactory for TMFLs and heretofore, none of the proposed solutions adequately address the problems that are particular to TMFLs.

It is an object of the present invention to provide a TMFL EEMS and a method of operating the TMFL EEMS that overcome at least one of these problems and that offers a useful alternative to the consumer.

### Statements of Invention

According to the invention there is provided a truck mounted forklift (TMFL) electronic engine management system (EEMS) comprising a processor, a memory having computer program instructions loaded thereon that when executed by the processor, cause the EEMS to:
determine when the amount of particulate matter (PM) in the diesel particulate filter (DPF) is at a first predetermined level, PL1;
latch the engine into a DPF regeneration mode, thereby causing the engine to automatically enter DPF regeneration mode each time the engine is turned on until the DPF regeneration has been performed and the amount of PM in the DPF is below a first regenerated level, RL1; and
unlatch the engine from DPF regeneration mode once the amount of PM in the DPF is below RL1.

By having such a TMFL EEMS, the engine is latched into a DPF regeneration mode that will ensure that the engine will attempt to perform the DPF regeneration when it is needed, each time that the engine is turned on, until the DPF regeneration has been completed. In this way, it is possible to ensure that the DPF regeneration is performed at a lower level than might otherwise be the case. It is common practice for the operators of TMFLs to deactivate the DPF regeneration for operational reasons. If the DPF regeneration is deactivated by an operator during normal operation of the TMFL, once the operator turns the engine off and back on again, the TMFL EEMS will automatically cause the engine to enter DPF regeneration mode once again. As the operating cycle of the TMFL is relatively short, if the DPF regeneration mode has been deactivated by the operator, the engine will re-enter the DPF regeneration mode relatively quickly thereafter, ensuring that the DPF regeneration is done at the earliest possible opportunity, and before the PM is likely to have built up to unacceptable levels. In this way, the need for more aggressive DPF regeneration levels is obviated to a large degree and the TMFL will be less likely to be subjected to lengthy periods of down-time during high level DPF regeneration procedures. In addition, by automatically performing regeneration in this way, the machine will use less fuel than in higher level regeneration modes as the machine is already in operation performing its normal tasks. In higher level, parked regeneration modes, the machine will be stationary, not performing useful tasks, and the engine will be at high revolutions which is inefficient from a fuel consumption point of view.

In one embodiment of the invention there is provided a TMFL electronic engine management system in which the EEMS is further programmed to:
determine when the amount of PM in the DPF is at a second predetermined level, PL2, greater than PL1; and
latching the engine into a parked DPF regeneration mode, prompting the operator to cause the engine to enter parked DPF regeneration mode each time the engine is turned on until the parked DPF regeneration has been performed and the amount of PM in the DPF is below the regenerated level, RL1; and
unlatch the engine from parked DPF regeneration mode once the amount of PM in the DPF is below RL1.

If the TMFL operator continues to deactivate the DPF regeneration each time that they turn the engine on, or do not allow the DPF regeneration to complete sufficiently to reduce the PM in the DPF from PL1 down to an acceptable level, RL1, the level of PM in the DPF may increase to a level PL2, greater than PL1. In that scenario, it will be necessary for more aggressive DPF regeneration steps to be undertaken to clear the DPF. In those instances, the TMFL EEMS will latch the engine into a parked DPF regeneration mode, allowing the EEMS to control the engine revs and fuel delivery to ensure that the DPF regeneration may be performed correctly, thereby obviating in large part the need for more aggressive DPF regeneration. The forklift will be less likely to be subjected to lengthy periods of down-time during even higher level DPF regeneration procedures.

In one embodiment of the invention there is provided a TMFL electronic engine management system in which the EEMS is further programmed to, on the engine entering parked DPF regeneration mode, automatically apply the brake of the TMFL. This is seen as a useful aspect of the present invention. By automatically applying the brake of the TMFL, the engine revs may be increased without fear that the machine could cause an accident, thereby increasing the safety of the DPF regeneration procedure.

In one embodiment of the invention there is provided a TMFL electronic engine management system in which the EEMS is further programmed to:
determine when the amount of PM in the DPF is at a third predetermined level, PL3, greater than PL2; and
latching the engine into a de-rated, parked DPF regeneration mode, thereby automatically de-rating the engine performance into a de-rated engine performance mode, prompting the operator to cause the engine to enter de-rated parked DPF regeneration mode each time the engine is turned on until the de-rated parked DPF regeneration has been performed and the amount of PM in the DPF is below the regenerated level, RL1;
maintaining the engine in the de-rated engine performance mode irrespective of TMFL operator input until the amount of PM in the DPF is below RL1; and
unlatch the engine from de-rated parked DPF regeneration mode once the amount of PM in the DPF is below RL1.

Again, if the TMFL operator continues to deactivate the DPF regeneration each time that they turn the engine on, or do not allow the DPF regeneration to complete sufficiently to reduce the PM in the DPF from PL2 down to an acceptable level, RL1, the level of PM in the DPF may increase to a level PL3, greater than PL2. In that scenario, it will be necessary for even more aggressive DPF regeneration steps to be undertaken to clear the DPF. In those instances, the TMFL EEMS will latch the engine into a de-rated parked DPF regeneration mode, allowing the EEMS to further control the engine revs and fuel delivery to ensure that the DPF regeneration may be performed correctly, thereby obviating in large part the need for an even more aggressive DPF regeneration process.

The TMFL will be less likely to be subjected to even more lengthy periods of down-time during higher level DPF regeneration procedures. By de-rating the engine, it is envisaged that this will make the operation of the TMFL cumbersome, thereby encouraging the TMFL operator to perform the DPF regeneration. This will be a further indication to the operator that the TMFL is in greater need of the DPF regeneration and a reminder that it is increasingly urgent to perform the DPF regeneration operation.

In one embodiment of the invention there is provided a TMFL electronic engine management system in which the EEMS is further programmed to, on the engine entering the de-rated, parked DPF regeneration mode, automatically apply the brake of the TMFL. This will provide a safer system and will increase the likelihood that the DPF regeneration process will not be postponed further.

In one embodiment of the invention there is provided a TMFL electronic engine management system in which the engine performance in de-rated engine performance mode is less than or equal to 80% of engine performance in a normal operating mode. This is seen as a useful way of providing all the functionality still but at a sufficiently low engine performance level that there will be a desire to perform the DPF regeneration.

In one embodiment of the invention there is provided a TMFL electronic engine management system in which the EEMS is further programmed to:
determine when the amount of PM in the DPF is at a fourth predetermined level, PL4, greater than PL3; and
latching the engine into a service DPF regeneration mode, thereby automatically de-rating the engine performance into a de-rated engine performance mode, prompting the operator to cause the engine to enter service DPF regeneration mode each time the TMFL operator attempts to turn the engine on until the service DPF regeneration has been performed and the amount of PM in the DPF is below the regenerated level, RL1;
unlatch the engine from the service DPF regeneration mode once the amount of PM in the DPF is below RL1.

In this way, if all warning signs have been continuously ignored and the operator of the TMFL has repeatedly deactivated or postponed the DPF regeneration modes, the TMFL EEMS will prompt the operator to prevent operation of the TMFL to ensure that harmful emissions from the exhaust of the TMFL are not emitted, polluting the environment. The TMFL may be allowed to operate in "limp home" mode in which the engine is de-rated to such an extent (e.g. 10% of normal operating power) that the forklift is essentially useless but will have sufficient power to be able to be mounted onto the artic chassis or trailer for transport back to the owner's premises.

In one embodiment of the invention there is provided a TMFL electronic engine management system in which the EEMS is further programmed to, on the engine entering into the service DPF regeneration mode, automatically applying the brake of the TMFL.

In one embodiment of the invention there is provided a TMFL electronic engine management system in which the EEMS is further programmed to cause the engine to remain in parked DPF regeneration mode, de-rated parked DPF regeneration mode or service DPF regeneration mode until the amount of PM in the DPF is below a second regenerated level, RL2, where RL2 is lower than RL1; and only unlatching the engine from parked DPF regeneration mode, de-rated parked DPF regeneration mode or service DPF regeneration mode once the amount of PM in the DPF is below RL2. In this way, if more aggressive DPF regeneration steps are being used, this will avail of the opportunity to reduce the amount of PM in the DPF further.

In one embodiment of the invention there is provided a TMFL electronic engine management system in which the step of the engine performing DPF regeneration mode, parked DPF regeneration mode, or de-rated parked DPF regeneration mode comprises the step of adding fuel to heat up the DPF.

In one embodiment of the invention there is provided a TMFL electronic engine management system in which the step of causing the engine to enter parked DPF regeneration mode or de-rated parked DPF regeneration mode comprises the program step of controlling the engine speed to heat up the DPF.

In one embodiment of the invention there is provided a TMFL electronic engine management system in which PL1 is set at 80% PM capacity of the DPF. This is seen as a useful threshold for causing the EEMS to enter the DPF regeneration mode. It is envisaged that it would take of the order of between 125 hours of TMFL operation to get to 80% PM capacity of the DPF. This will provide a significant amount of time between regeneration operations.

In one embodiment of the invention there is provided a TMFL electronic engine management system in which PL2 is set at 90% PM capacity of the DPF. It is envisaged that it will take between 20 to 30 hours to get from PL1 to PL2 and therefore there will be sufficient opportunity to obviate the need for higher, more aggressive regeneration levels.

In one embodiment of the invention there is provided a TMFL electronic engine management system in which PL3 is set at 100% PM capacity of the DPF.

In one embodiment of the invention there is provided a TMFL electronic engine management system in which PL4 is set at 110% PM capacity of the DPF.

In one embodiment of the invention there is provided a TMFL electronic engine management system in which RL1 is set at 14% PM capacity of the DPF.

In one embodiment of the invention there is provided a TMFL electronic engine management system in which RL2 is set at 7% PM capacity of the DPF.

In one embodiment of the invention there is provided a TMFL having the TMFL electronic engine management system according to the invention. This is seen as a particularly useful TMFL that will comply with the environmental legislation, will be more efficient and effective to operate, and that will have less downtime due to DPF regeneration procedures.

In one embodiment of the invention there is provided a method of operating a TMFL electronic engine management system (EEMS) comprising the steps of:
determining when the amount of particulate matter (PM) in the diesel particulate filter (DPF) is at a first predetermined level, PL1;
latching the engine into a DPF regeneration mode, prompting the operator to cause the engine to enter DPF regeneration mode each time the engine is turned on until the DPF regeneration has been performed and the amount of PM in the DPF is below a first regenerated level, RL1; and
unlatching the engine from DPF regeneration mode once the amount of PM in the DPF is below RL1.

By having such a method of operating a TMFL EEMS, the engine is latched into a DPF regeneration mode that will ensure that the engine will attempt to perform the DPF regeneration when it is needed, each time that the engine is turned on, until the DPF regeneration has been completed. In this way, it is possible to ensure that the DPF regeneration is performed at a lower level than might otherwise be the case. It is common practice for the operators of TMFLs to deactivate the DPF regeneration for operational reasons. If the DPF regeneration is deactivated by an operator during normal operation of the TMFL, once the operator turns the engine off and back on again, the method will automatically cause the engine to enter DPF regeneration mode once again. As the operating cycle of the TMFL is relatively short, if the DPF regeneration mode has been deactivated by the operator, the engine will re-enter the DPF regeneration mode relatively quickly thereafter, ensuring that the DPF regeneration is done at the earliest possible opportunity, and before the PM is likely to have built up to unacceptable levels. In this way, the need for more aggressive DPF regeneration levels is obviated to a large degree and the forklift will be less likely to be subjected to lengthy periods of down-time during high level DPF regeneration procedures.

In one embodiment of the invention there is provided a method of operating a TMFL electronic engine management system, comprising the steps of:
determining when the amount of PM in the DPF is at a second predetermined level, PL2, greater than PL1; and
latching the engine into a parked DPF regeneration mode, prompting the operator to cause the engine to enter parked DPF regeneration mode each time the engine is turned on until the parked DPF regeneration has been performed and the amount of PM in the DPF is below the regenerated level, RL1; and
unlatching the engine from parked DPF regeneration mode once the amount of PM in the DPF is below RL1.

In one embodiment of the invention there is provided a method of operating a TMFL electronic engine management system, comprising the steps of:
determining when the amount of PM in the DPF is at a third predetermined level, PL3, greater than PL2; and
latching the engine into a de-rated, parked DPF regeneration mode, thereby automatically de-rating the engine performance into a de-rated engine performance mode, prompting the operator to cause the engine to enter de-rated parked DPF regeneration mode each time the engine is turned on until the de-rated parked DPF regeneration has been performed and the amount of PM in the DPF is below the regenerated level, RL1;
maintaining the engine in the de-rated engine performance mode irrespective of TMFL operator input until the amount of PM in the DPF is below RL1; and
unlatching the engine from de-rated parked DPF regeneration mode once the amount of PM in the DPF is below RL1.

In one embodiment of the invention there is provided a method of operating a TMFL electronic engine management system, in which the step of maintaining the engine in the de-rated engine performance mode irrespective of TMFL operator input until the amount of PM in the DPF is below RL1 comprises limiting engine performance in de-rated engine performance mode to less than or equal to 80% of engine performance in a normal operating mode.

In one embodiment of the invention there is provided a method of operating a TMFL electronic engine management system, comprising the steps of:
determine when the amount of PM in the DPF is at a fourth predetermined level, PL4, greater than PL3; and
latching the engine into a service DPF regeneration mode, thereby automatically de-rating the engine performance into a de-rated engine performance mode, and prompting the operator to cause the engine to enter service DPF regeneration mode each time the TMFL operator attempts to turn the engine on until the service DPF regeneration has been performed and the amount of PM in the DPF is below the regenerated level, RL1;
unlatching the engine from the service DPF regeneration mode once the amount of PM in the DPF is below RL1.

In one embodiment of the invention there is provided a method of operating a TMFL electronic engine management system, comprising the steps of:
automatically applying the brake on the engine entering into one of a parked DPF regeneration mode, the de-rated parked DPF regeneration mode or the service DPF regeneration mode.

In one embodiment of the invention there is provided a method of operating a TMFL electronic engine management system, comprising the steps of:
causing the engine to remain in parked DPF regeneration mode, de-rated parked DPF regeneration mode or service DPF regeneration mode until the amount of PM in the DPF is below a second regenerated level, RL2, where RL2 is lower than RL1; and only unlatching the engine from parked DPF regeneration mode, de-rated parked DPF regeneration mode or service DPF regeneration mode once the amount of PM in the DPF is below RL2.

### Detailed Description of the Invention

The invention will now be more clearly understood from the following description of some embodiments thereof given by way of example only with reference to the accompanying drawings, in which:-
Figure 1 is a diagrammatic representation of a diesel engine construction according to the invention that complies with the directive;
Figure 2 is a diagrammatic cross-sectional representation of a DPF;
Figure 3 is a grid showing the different levels of DPF regeneration;
Figure 4 is another grid showing the different levels of DPF regeneration;
Figure 5 is a flow diagram illustrating operator interactions in DPF regeneration processes;
Figure 6 is a graph of DPF regeneration processes;
Figure 7 is a diagrammatic view of a user interface for the TMFL operator;
Figures 8(a) to 8(c) are diagrammatic views of a user interface for the TMFL operator; and
Figure 9 is a diagrammatic representation of a TMFL having the EEMS according to the invention.

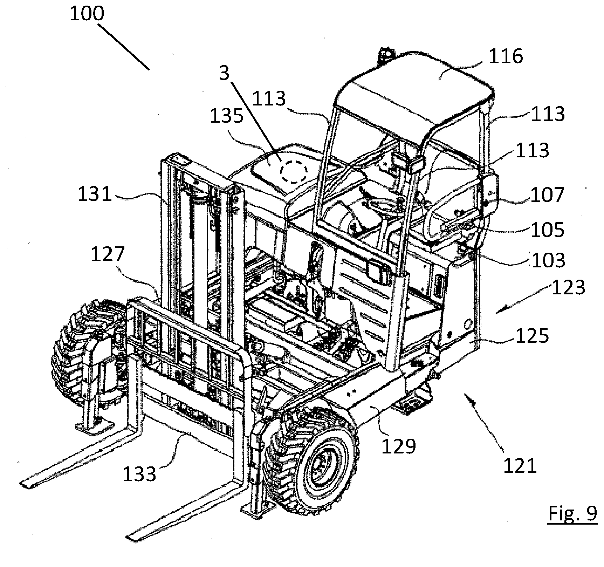

Referring initially to Figure 9, there is shown a truck mounted forklift (TMFL), indicated generally by the reference numeral 100, in which the EEMS 3 (shown in dashed outline) according to the invention is installed. The TMFL 100 comprises a U-shaped chassis 121 having a pair of forwardly projecting side bars 127, 129 bridged by a rear crossbar 125. A lifting assembly, in this case an upright mast 131, having a fork carriage 133 thereon carrying tines, is mounted on the U-shaped chassis 121. The lifting assembly is configured for reciprocal movement forwards and backwards on the chassis along the side bars 127, 129 as generally understood in the art. In this way, the TMFL is able to be mounted compactly on the rear of a carrying vehicle (not shown), is able to provide improved reach, and the lifting assembly is able to pick up, transport and put down loads rearward of the front wheels, thereby increasing the lifting capacity of the forklift truck and the stability during transit when carrying a load.

The TMFL further comprises a driver's station 123 on one side of the chassis and a diesel engine unit 135 on the other side of the chassis. The driver's station comprises a seat 103, a safety side bar 105, a safety side bar locking mechanism 107 and an enclosure comprising a plurality of spaced apart uprights 113 and a roof 116 for the driver's station.

The TMFL 100 is only one illustrative embodiment of TMFL in which the EEMS according to the present invention may be put to good use. It will be understood that various modifications could be made to the TMFL 100 without departing from the scope of the invention. For example, the upright mast 131 may be a single or a multistage mast. Indeed, instead of an upright mast 131, a telescopic boom arrangement may be provided or indeed a linkage arrangement could be provided. Various reach mechanisms such as a pantograph linkage or telescopic tines could be provided to improve the reach of the forks.

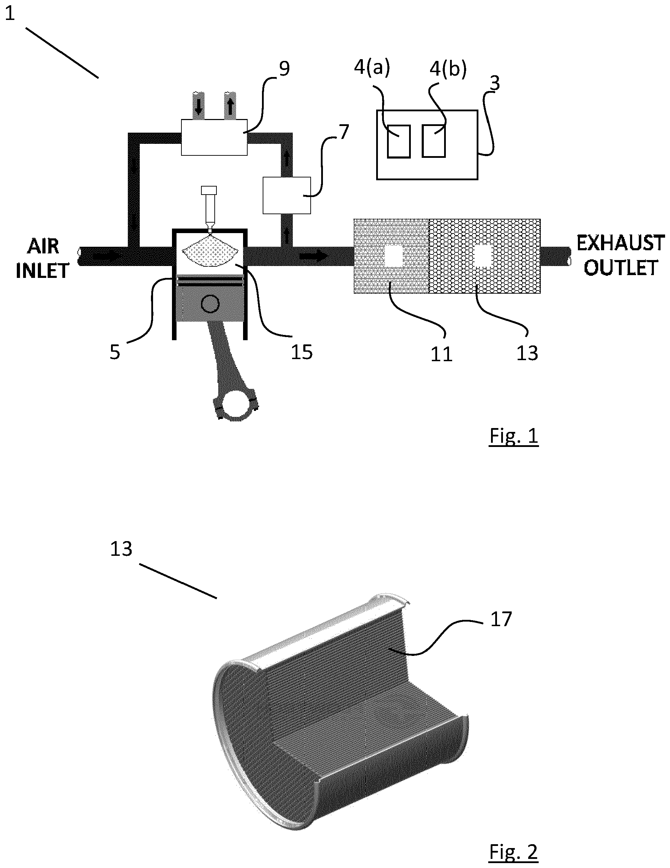

Referring now to Figure 1, there is shown a diagrammatic representation of a diesel engine construction, for a truck mounted forklift (TMFL), according to the invention that complies with European Union (EU) Regulation 2016/1628 governing exhaust emissions, indicated generally by the reference numeral 1. The diesel engine 1 comprises an electronic engine management system (EEMS) 3, a common rail fuel system 5, an exhaust gas recirculation unit 7, an exhaust gas recirculation cooler 9, a diesel oxidation catalyst 11 and a diesel particulate filter (DPF) 13.

In use, the common rail fuel system 5 burns diesel in its combustion chamber 15. Some of the exhaust gases are recirculated for mixture back into the combustion chamber 15 by the exhaust gas recirculation unit. The recirculated exhaust gases may be cooled in the exhaust gas recirculation cooler 9 if necessary before being delivered back into the combustion chamber. Other exhaust gases pass from the combustion chamber to the diesel oxidation catalyst and from there, through the DPF. The DPF captures particulate matter (PM) in the exhaust gases and stores that PM until it is possible to "burn off" the PM in the DPF as part of a DPF regeneration process.

The EEMS 3 monitors the level of PM in the DPF and when the level of PM in the DPF exceeds a certain threshold, PL1, the EEMS will operate to cause the engine to perform a DPF regeneration process. It is envisaged that this monitoring of PM level may be done in a number of different ways. For example, it is envisaged that the EEMS may determine the amount of PM based on the length of operating time of the TMFL since the last DPF regeneration. For example, if the TMFL has been in operation for 125 hours since the last regeneration, it will be considered that the PM level will be of the order of 80% of the capacity of the DPF. Alternatively, sensors could be used, such as for example pressure sensors to determine the amount of PM in the DPF or weighing sensors to detect the weight of the DPF. In a preferred embodiment, the engine's engine control unit (ECU), which could be part of the EEMS, uses a mathematical model which calculates the PM based on two or more of the following: (i) fuel injected; (ii) engine temperature; (iii) engine speed; and (iv) known engine efficiency. The EEMS latches the engine into the DPF regeneration mode and the engine will remain in DPF regeneration mode until such time that the amount of PM in the DPF is below a second amount, RL1.

The EEMS can operate the common rail fuel system 5 to modify the amount of fuel being injected into the combustion chamber as well as the engine revs. For example, the EEMS may increase the engine revs and/or the amount of fuel in the combustion chamber to perform DPF regeneration.

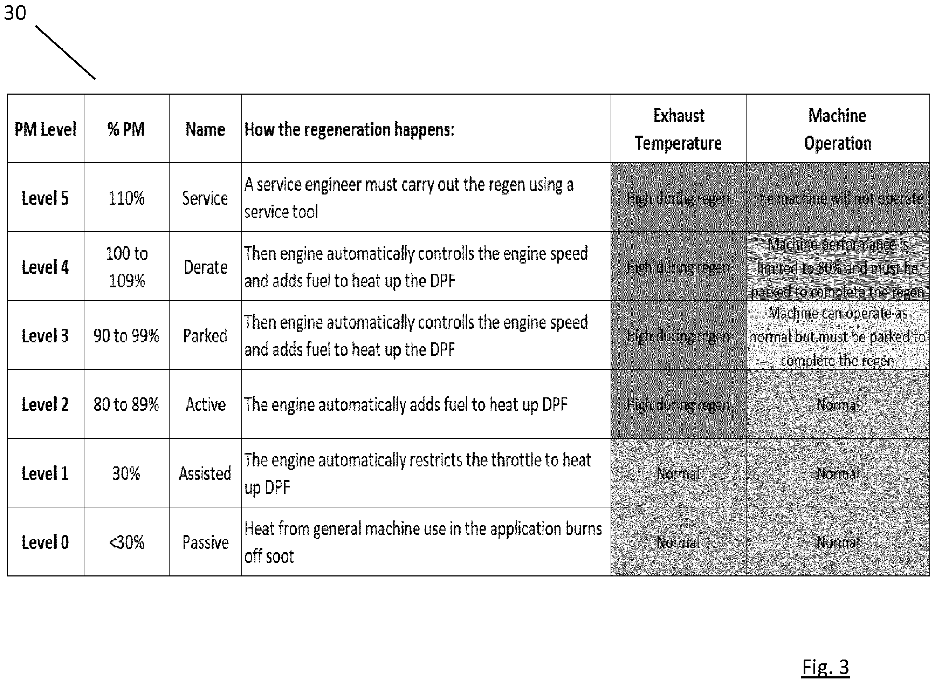

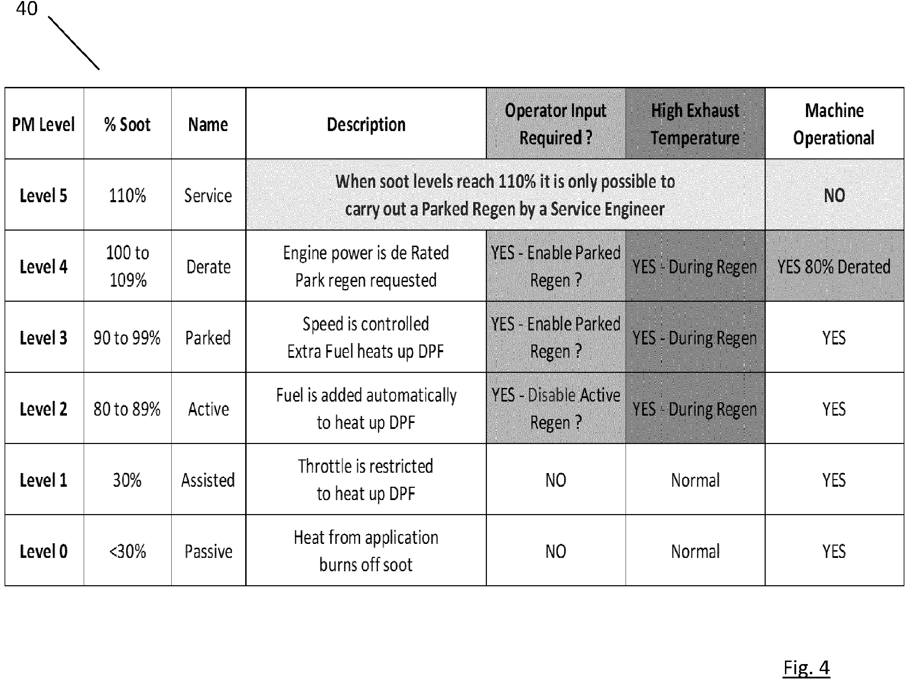

Referring now to Figure 2, there is shown a diagrammatic cross-sectional representation of a DPF filter used in the engine according to the present invention. The DPF essentially comprises a ceramic mesh/filter 17 that is sized to trap particulate matter (PM) (e.g. soot) above a certain size from the exhaust gases, reduce the emissions from the engine and prevent that PM being released into the atmosphere. Due to the fact that the DPF filter only has a finite capacity, the trapped PM has to be burned off from time to time to regenerate the DPF. Otherwise, the DPF will become clogged and harmful particulate matter may be released in the gaseous emissions. The regeneration process requires the machine to achieve very high temperatures within the DPF in order to burn off the PM. Depending on the amount of PM in the DPF, this is carried out in a number of different ways, referred to as levels, which will be better understood with reference to Figures 3 and 4 below.

Referring now to Figure 3, there is shown a grid 30 illustrating the different levels of DPF regeneration, including the PM level, the % soot, the name, the description of regeneration action(s), the exhaust temperature and the machine operation status. At each level, the engine tries to burn off the PM in a different manner, this can affect the machine operation and the exhaust gas temperature.

The engine will start at level 0 and if sufficient PM is not burnt off, it will move up through the levels in an attempt to burn off more PM. In level 0, the DPF is determined to have less than 30% PM capacity and the DPF is in "passive" mode, where the heat from general machine use in the application is used to burn off soot. The exhaust temperature and the machine operation are normal. In level 1, the DPF is determined to have greater than or equal to 30% PM capacity and less than 80% PM capacity. The DPF is in "assisted" mode, and the engine will automatically restrict the throttle to heat up the DPF. The exhaust temperature and the machine operation are normal.

In level 2, which is the most important level for the system and method according to the present invention, the DPF is determined to have greater than or equal to 80% PM capacity and less than 90% PM capacity (i.e. PL1). The DPF is in "active" mode, and the engine will automatically add fuel to heat up the DPF. The exhaust temperature is high during regeneration and the machine operation is normal. This is the level that the present invention attempts to carry out the most regeneration, as will be described in more detail below. In level 3, the DPF is determined to be at greater than or equal to 90% PM capacity and less than 100% PM capacity (i.e. PL2). The DPF is in "parked" mode, and the engine will automatically control engine speed and add fuel to heat up the DPF. The exhaust temperature is high during regeneration and the machine can operate as normal but must be parked to complete the regeneration. It will be understood that in this level, the machine is parked and therefore is unavailable for use in the transport of goods.

In level 4, the DPF is determined to be at greater than or equal to 100% PM capacity and less than 110% PM capacity (i.e. PL3). The DPF is in "de-rate" mode, and the engine will automatically control engine speed and add fuel to heat up the DPF. The exhaust temperature is high during regeneration and the machine performance is limited to 80% normal operating performance and must be parked to complete the regeneration. It will be understood that in this level, the machine is parked and therefore is unavailable for use in the transport of goods. The machine is de-rated by 20% however it could be 25%, 30% or other level of de-rating. Generally speaking, a high level of de-rating is selected to limit the machine's productivity and to encourage the operator to perform a parked regeneration. This reduces the likelihood of the machine entering PL4 (Service Mode) which would otherwise incur additional time and service engineer costs.

Finally, in level 5, the DPF is determined to be at greater than or equal to 110% PM capacity (i.e. PL4). The DPF is in "service" mode, in which a service engineer must carry out the regeneration using a service tool. The exhaust temperature is high during regeneration and the machine cannot operate. It will be understood that in this level, the machine is therefore unavailable for use in the transport of goods. It is envisaged that potentially, the machine may be able to operate in trickle mode or an even more restricted de-rate mode where the machine has of the order of 10% of the normal power to allow the TMFL to be transported to and mounted onto the carrying vehicle and brought back to the owner's premises or to a service depot. In service mode, the engine is de-rated at all times in order to limit the machine's productivity and encourage the operator to call for a service engineer. The PM percentages separating the different levels used above are used for illustrative purposes, are deemed useful but not necessarily limiting unless otherwise specified in the claims.

Referring to Figure 4, there is shown a grid 40, similar to the grid in Figure 3, illustrating the different levels of DPF regeneration, including the PM level, the % PM (soot), the name, the description of its impact on machine operation, whether operator input is required and if so, what input, the exhaust temperature and the machine operation status. As before, at each level, the engine tries to burn off the PM in a different manner, this can affect the machine operation and the exhaust gas temperature.

In level 0, as before, the heat from normal operation is used, if possible, to burn of excess PM. In level 1, the throttle is restricted to heat up the DPF. In level 2, the level or most interest to the present invention, fuel is added automatically to heat up the DPF. The fuel is typically added to the back-end of the common rail fuel system. Appropriate timing may be used to ensure the maximum fuel burn and temperature is achieved. The exhaust gas temperature is higher than normal and the operator is given an option on a user interface (Ul) (not shown), whether or not they wish to inhibit (deactivate) the active DPF regeneration level (level 2). If they activate (by depressing or selecting in another way) the appropriate icon on the Ul, the active regeneration level will be inhibited and the TMFL will revert to level 1. If the operator deactivates the DPF regeneration, the TMFL will remain deactivated until the ignition is switched off. However, the next time that the TMFL is started, the TMFL will automatically go into Level 2 once more. The TMFL will remain in this level until the level or PM is below a predetermined level (RL1), as will be discussed in more detail below.

In level 3, if the user has repeatedly deactivated the DPF regeneration, the level of soot (PM) will have built up further. The speed of the engine timing is controlled and extra fuel is added to heat up the DPF. This time, the operator will be prompted on the UI whether or not they wish to engage parked regeneration. If they select parked regeneration on the Ul, the brake will be applied and the TMFL will undergo a parked regeneration process. In level 4, when the level of PM has increased further and is close to maximum, the engine power is de-rated to 80% of normal operating performance, and the park regeneration is prompted on the Ul. If the operator of the TMFL selects the parked regeneration mode, the brake will be applied and the machine will enter into a DPF regeneration process. Finally, in level 5, the machine should no longer be operated as the emissions from the machine will be harmful to the environment and the TMFL will have to undergo a parked regeneration by a service engineer. A parked regeneration process takes approximately 50 minutes to complete. Therefore, it will be understood that it is advantageous to avoid DPF regeneration level 3 or higher.

From grids 30 and 40 in Figures 3 and 4, it can be seen that it would be advantageous to complete as much DPF regeneration as possible at levels 0 and 1 in order to minimise operator interaction, fuel consumption and high exhaust temperatures. However, as alluded to above, the TMFL is used in a wide range of disparate applications and in the most typical applications, the machine is operational for only short periods of time, spending the majority of the time mounted on the rear of the truck or trailer travelling between delivery/collection sites. As will be understood, this poses a particular challenge with respect to DPF regeneration in TMFLs as in order to achieve regeneration in levels 0 and 1, long running periods are required in order to raise the temperature in the DPF. Levels 0 and 1 in a large amount of TMFL applications will not result in any regeneration to the DPF. Regeneration in Levels 3 and higher (with parked regeneration) can take up to 50 minutes to complete and this is to be avoided as it is unproductive and wasteful of resources.

According to the present invention, it is advantageous to perform DPF regeneration in Level 2 regeneration mode. To that end, once the machine enters level 2, the operator is offered to inhibit the active regeneration (which they may need to do as a consequence of their environment). In other systems, if the inhibit option is selected, the option will remain selected unless the operator chooses to deselect it. However, according to the present invention, to maximise the opportunity to regenerate at level 2, the inhibit regeneration option is available to the operator however if the inhibit option is selected, it will be reset once the machine is turned off. In this way, the operator will have to select the inhibit option each time the machine is turned on once more in order to prevent regeneration continuously operating. In this way, regeneration at level 2 is more likely to happen. Once active regeneration begins, the engine will remain latched on in this regeneration mode and will remain in that mode unless inhibited or until the PM level is of the order of 14% PM (i.e. RL1) capacity of the DPF or less.

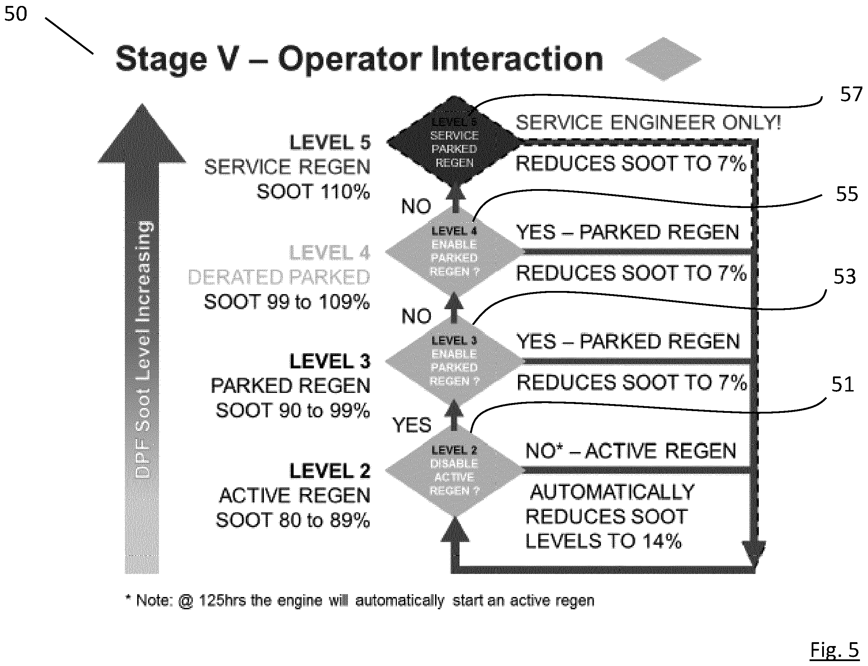

Referring to Figure 5, there is shown a flow diagram, indicated by the reference numeral 50, illustrating operator interactions in DPF regeneration processes from level 2 upwards. Levels 0 and 1 do not require any operator interaction and so are omitted for clarity. In step 51, during level 2 DPF regeneration, the operator is prompted on the UI whether or not they wish to disable the active regeneration. If they don't select to deactivate the regeneration mode, the TMFL EEMS will cause the engine to enter active regeneration mode and the temperature of the DPF will be increased to burn off the excess PM until such time that the PM level is at or below 14% (RL1). If, however, the operator does select the deactivate/disable active regeneration option, as the soot levels build, the DPF PM level will, over time, increase to over 90% capacity (PL2) and the EEMS will enter into step 53, level 3 DPF regeneration mode. In level 3, the operator will be prompted on the UI whether or not they wish to enable parked regeneration mode. If the operator of the TMFL selects parked regeneration mode, the brake will be applied and the EEMS will operate the engine in parked regeneration mode until the PM level is reduced to of the order of 7% PM capacity (i.e. regenerated level 2, RL2).

If in level 3, the operator does not select parked regeneration mode, as the soot builds up further, the level of PM will exceed 100% capacity (PL3) and proceed to step 55, level 4 DPF regeneration mode. Again, the operator of the TMFL will be prompted on the UI whether or not they wish to enter parked regeneration mode. If the operator of the TMFL selects parked regeneration mode, the brake will be applied and the EEMS will operate the engine in parked regeneration mode until the PM level is reduced to of the order of 7% PM capacity (i.e. regenerated level 2, RL2). If, however, in level 4 the operator does not select parked regeneration mode, the level of PM in the DPF will increase to 110% capacity (PL4) and proceed to step 57. In step 57, the EEMS operates service regeneration mode and only a service engineer will be able to regenerate the DPF to of the order of 7% PM capacity.

In the embodiments above, it will be understood that the operator is shown as having the option of entering parked regeneration mode or not and the default mode is that the machine continues operating instead of entering parked regeneration mode. It will be understood that this could be reversed and instead of the default mode being that the machine continues to operate, instead the default operating mode could be to enter into the parked regeneration mode and the operator would have to deselect that mode.

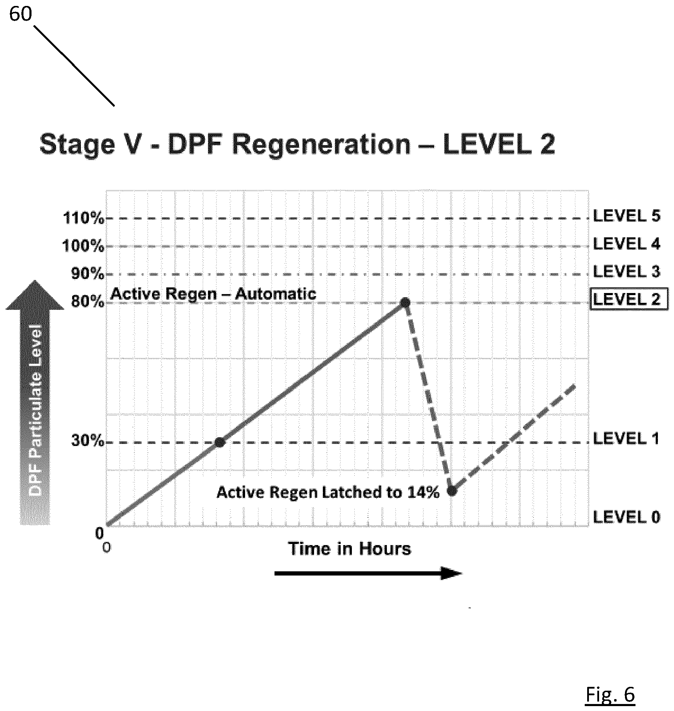

Referring now to Figure 6, there is shown a graph of DPF regeneration processes including their levels of PM % in the DPF filter. Ideally, the graph would, over time, take on a saw-toothed configuration. Starting at 0% PM capacity, the % of PM in the DPF increases steadily over time. As mentioned already, the amount of regeneration in levels 0 and 1 in most TMFL applications will be negligible. Once the PM % in the DPF reaches 80% capacity, the DPF regeneration will begin and will continue until the PM % is reduced to 14% capacity. Thereafter, the engine will be allowed to operate normally once more until the PM level in the DPF reaches 80% and the process will continue. It will be understood that if the DPF regeneration mode in level 2 is inhibited, the TMFL engine will shortly enter Level 3 and above unless corrective action is taken. It is envisaged that it could take approximately 125 working hours to get from RL1 (14% PM< capacity) to PL1 (80% PM capacity) and between 20 to 30 working hours to get from PL1 to PL2 (90% PM capacity). This will of course depend on a number of factors including the fuel characteristics, the machine characteristics, and the operating characteristics.

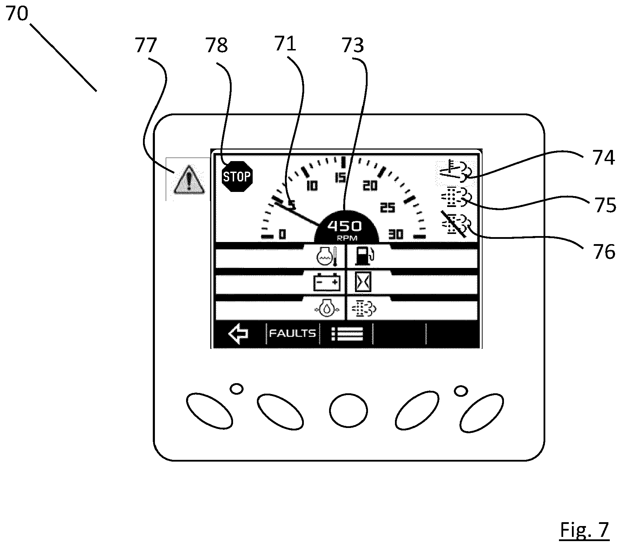

Referring now to Figure 7, there is shown a user interface (Ul), indicated generally by the reference numeral 70. The UI 70 includes the speed dial 71, the engine RPMs indicator 73, the high exhaust temperature indicator 74, the regeneration status indicator 75, and the regeneration inhibitor status indicator 76. The regeneration status indicator 75 will remain on if a regeneration is required, will flash if regeneration is currently underway in either active or parked mode. The regeneration inhibitor status indicator 76 is illuminated when the operator has inhibited the regeneration. An engine de-rated symbol 77 is displayed when the engine is de-rated due to PM levels reaching 100% and an engine stop symbol 78 is displayed when the engine is stopped/de-rated due to PM levels reaching 110% and a service technician is required.

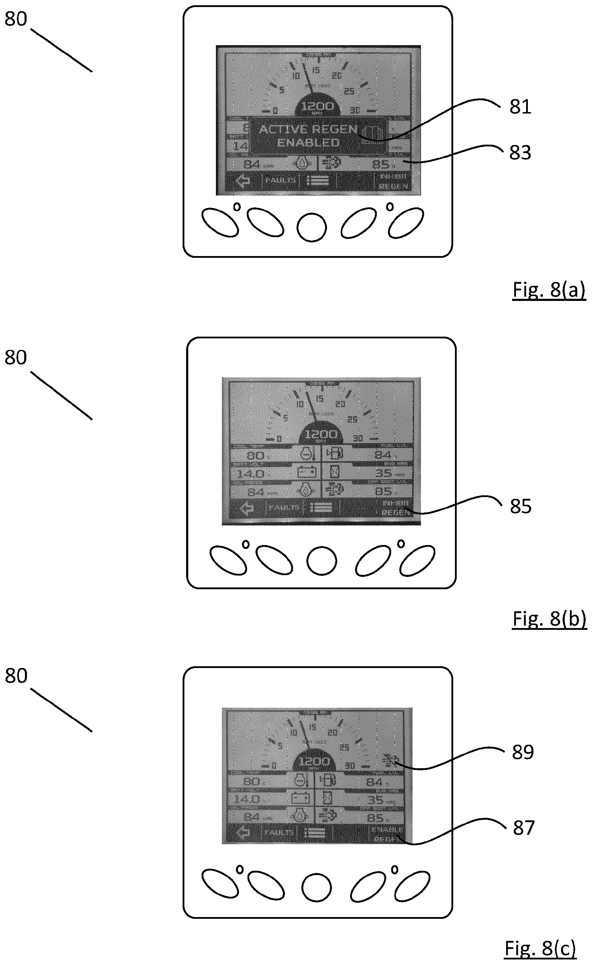

Referring now to Figures 8(a), 8(b) and 8(c), there are shown diagrammatic views of a user interface for the TMFL operator, indicated generally by the reference numeral 80. The user interfaces 80 will guide the operator during active regeneration. In Figure 8(a), the PM % level in the DPF reaches 80% or above and the active regeneration trigger is triggered and latches the EEMS into an active regeneration mode. A warning message 81 is displayed on the UI that active regeneration has been enabled. The UI includes a DPF PM% level indicator 83. Referring to Figure 8(b), it can be seen that there is an "inhibit regen" "button" 85 that may be selected using a pointer or for a touch screen, by the operator pressing the appropriate area on the screen with their digit. If the operator presses the "inhibit regen" button 85, the "inhibit regen" button 85 will transition to an "enable regen" "button" 87 on the UI (as illustrated in Figure 8(c)) and an inhibited regen symbol 89 will be displayed on the UI so that the operator is aware that the regeneration is being inhibited. The operator can recommence the DPF regeneration using the "enable regen" button 87 by selecting or pressing that button 87.

It will be further understood that various parts of the present invention are performed in hardware and other parts of the invention may be performed either in hardware and/or software. For example, the EEMS comprises a processor 4(a) and a memory 4(b) having computer program instructions loaded thereon. It will be understood that the method steps and various components of the present invention will be performed largely in software and therefore the present invention extends also to computer programs, on or in a carrier, comprising program instructions for causing a computer or a processor to carry out steps of the method or provide functional components for carrying out those steps. The computer program may be in source code format, object code format or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM or a hardware circuit. In certain circumstances, a transmissible carrier such as a carrier signal when transmitted either wirelessly and/or through wire and/or cable could carry the computer program in which cases the wire and/or cable constitute the carrier.

In this specification the terms "comprise, comprises, comprised and comprising" and the term "include, includes, included and including" are all deemed interchangeable and should be afforded the widest possible interpretation.

The invention is not solely limited to the embodiments hereinbefore described but may be varied in both construction and detail within the scope of the appended claims.

## Claims

1. A truck mounted forklift (TMFL) (100) electronic engine management system (EEMS) (3) comprising a processor 4(a), a memory 4(b) having computer program instructions loaded thereon that when executed by the processor, cause the EEMS to:
determine when the amount of particulate matter (PM) in the diesel particulate filter (DPF) (13) is at a first predetermined level, PL1; **characterized in that** the computer program instructions cause the EEMS to:
latch the engine (1) into a DPF regeneration mode, thereby causing the engine (1) to automatically enter DPF regeneration mode each time the engine is turned on until the DPF regeneration has been performed and the amount of PM in the DPF is below a first regenerated level, RL1; and
unlatch the engine (1) from DPF regeneration mode once the amount of PM in the DPF (13) is below RL1.

2. A TMFL electronic engine management system (3) as claimed in claim 1 in which the EEMS is further programmed to:
determine when the amount of PM in the DPF (13) is at a second predetermined level, PL2; and
latching the engine (1) into a parked DPF regeneration mode, prompting the operator to cause the engine to enter parked DPF regeneration mode each time the engine is turned on until the parked DPF regeneration has been performed and the amount of PM in the DPF is below the regenerated level, RL1; and
unlatch the engine (1) from parked DPF regeneration mode once the amount of PM in the DPF is below RL1.

3. A TMFL electronic engine management system (3) as claimed in claim 1 or 2 in which the EEMS is further programmed to:
determine when the amount of PM in the DPF (13) is at a third predetermined level, PL3; and
latching the engine (1) into a de-rated, parked DPF regeneration mode, thereby automatically de-rating the engine performance into a de-rated engine performance mode, prompting the operator to cause the engine to enter de-rated parked DPF regeneration mode each time the engine is turned on until the de-rated parked DPF regeneration has been performed and the amount of PM in the DPF (13) is below the regenerated level, RL1;
maintaining the engine (1) in the de-rated engine performance mode irrespective of TMFL operator input until the amount of PM in the DPF (13) is below RL1; and
unlatch the engine (1) from de-rated parked DPF regeneration mode once the amount of PM in the DPF (13) is below RL1.

4. A TMFL electronic engine management system (3) as claimed in claim 3 in which the engine performance in de-rated engine performance mode is less than or equal to 80% of engine performance in a normal operating mode.

5. A TMFL electronic engine management system (3) as claimed in any preceding claim in which the EEMS is further programmed to:
determine when the amount of PM in the DPF (13) is at a fourth predetermined level, PL4; and
latching the engine (1) into a service DPF regeneration mode, thereby automatically de-rating the engine performance into a de-rated engine performance mode, prompting the operator to cause the engine (1) to enter service DPF regeneration mode each time the TMFL operator attempts to turn the engine on until the service DPF regeneration has been performed and the amount of PM in the DPF (13) is below the regenerated level, RL1;
unlatch the engine (1) from the service DPF regeneration mode once the amount of PM in the DPF is below RL1.

6. A TMFL electronic engine management system (3) as claimed in any one of claims 2 to 5 in which the EEMS (3) is further programmed to, on the engine (1) entering into one of: (i) the parked DPF regeneration mode; (ii) the de-rated parked DPF regeneration mode, and (iii) the service DPF regeneration mode; automatically applying the brake of the TMFL.

7. A TMFL electronic engine management system (3) as claimed in any one of claims 2 to 6 inclusive in which the EEMS (3) is further programmed to cause the engine to remain in parked DPF regeneration mode, de-rated parked DPF regeneration mode or service DPF regeneration mode until the amount of PM in the DPF is below a second regenerated level, RL2, where RL2 is lower than RL1; and only unlatching the engine from parked DPF regeneration mode, de-rated parked DPF regeneration mode or service DPF regeneration mode once the amount of PM in the DPF is below RL2.

8. A TMFL electronic engine management system (3) as claimed in any preceding claim in which the step of the engine (1) performing DPF regeneration mode, parked DPF regeneration mode, or de-rated parked DPF regeneration mode comprises the step of adding fuel to heat up the DPF.

9. A TMFL electronic engine management system (3) as claimed in any preceding claim in which the step of the engine (1) performing parked DPF regeneration mode or de-rated parked DPF regeneration mode comprises the step of controlling the engine speed to heat up the DPF.

10. A TMFL electronic engine management system (3) as claimed in any preceding claim in which PL1 is set at 80% PM capacity of the DPF (13); PL2 is set at 90% PM capacity of the DPF (13); PL3 is set at 100% PM capacity of the DPF (13); PL4 is set at 110% PM capacity of the DPF (13); RL1 is set at 14% PM capacity of the DPF (13); and RL2 is set at 7% PM capacity of the DPF (13).

11. A TMFL (100) having a truck mounted forklift (TMFL) (100) electronic engine management system (EEMS) (3) comprising a processor 4(a), a memory 4(b) having computer program instructions loaded thereon that when executed by the processor, cause the EEMS to:
determine when the amount of particulate matter (PM) in the diesel particulate filter (DPF) (13) is at a first predetermined level, PL1; **characterized in that** the computer program instructions cause the EEMS to:
latch the engine (1) into a DPF regeneration mode, thereby causing the engine (1) to automatically enter DPF regeneration mode each time the engine is turned on until the DPF regeneration has been performed and the amount of PM in the DPF is below a first regenerated level, RL1; and
unlatch the engine (1) from DPF regeneration mode once the amount of PM in the DPF (13) is below RL1.

12. A method of operating a TMFL electronic engine management system (EEMS) (3) comprising the steps of:
determining when the amount of particulate matter (PM) in the diesel particulate filter (DPF) (13) is at a first predetermined level, PL1;
latching the engine (1) into a DPF regeneration mode, thereby causing the engine (1) to automatically enter DPF regeneration mode each time the engine is turned on until the DPF regeneration has been performed and the amount of PM in the DPF (13) is below a first regenerated level, RL1; and
unlatching the engine (1) from DPF regeneration mode once the amount of PM in the DPF is below RL1.

13. A method of operating a TMFL electronic engine management system (3) as claimed in claim 12, comprising the steps of:
determining when the amount of PM in the DPF (13) is at a second predetermined level, PL2; and
latching the engine (1) into a parked DPF regeneration mode, prompting the operator to cause the engine to enter parked DPF regeneration mode each time the engine is turned on until the parked DPF regeneration has been performed and the amount of PM in the DPF (13) is below the regenerated level, RL1; and
unlatching the engine (1) from parked DPF regeneration mode once the amount of PM in the DPF is below RL1.

14. A method of operating a TMFL electronic engine management system (3) as claimed in claim 12 or 13, comprising the steps of:
determining when the amount of PM in the DPF (13) is at a third predetermined level, PL3; and
latching the engine (1) into a de-rated, parked DPF regeneration mode, thereby automatically de-rating the engine performance into a de-rated engine performance mode, prompting the operator to cause the engine to enter de-rated parked DPF regeneration mode each time the engine is turned on until the de-rated parked DPF regeneration has been performed and the amount of PM in the DPF (13) is below the regenerated level, RL1;
maintaining the engine (1) in the de-rated engine performance mode irrespective of TMFL operator input until the amount of PM in the DPF (13) is below RL1; and
unlatching the engine (1) from de-rated parked DPF regeneration mode once the amount of PM in the DPF is below RL1.

15. A method of operating a TMFL electronic engine management system (3) as claimed in claim 14, in which the step of maintaining the engine (1) in the de-rated engine performance mode irrespective of TMFL operator input until the amount of PM in the DPF is below RL1 comprises limiting engine performance in de-rated engine performance mode to less than or equal to 80% of engine performance in a normal operating mode.

16. A method of operating a TMFL electronic engine management system (3) as claimed in any one of claims 12 to 15, comprising the steps of:
determine when the amount of PM in the DPF (13) is at a fourth predetermined level, PL4; and
latching the engine (1) into a service DPF regeneration mode, thereby automatically de-rating the engine performance into a de-rated engine performance mode, prompting the operator to cause the engine to enter service DPF regeneration mode each time the TMFL operator attempts to turn the engine on until the service DPF regeneration has been performed and the amount of PM in the DPF is below the regenerated level, RL1;
unlatching the engine (1) from the service DPF regeneration mode once the amount of PM in the DPF is below RL1.

17. A method of operating a TMFL electronic engine management system (3) as claimed in any one of claims 12 to 16, comprising the steps of:
automatically applying the brake on the engine entering into one of a parked DPF regeneration mode, the de-rated parked DPF regeneration mode or the service DPF regeneration mode.

18. A method of operating a TMFL electronic engine management system (3) as claimed in any one of claims 13 to 17, comprising the steps of:
causing the engine (1) to remain in parked DPF regeneration mode, de-rated parked DPF regeneration mode or service DPF regeneration mode until the amount of PM in the DPF is below a second regenerated level, RL2, where RL2 is lower than RL1; and only unlatching the engine from parked DPF regeneration mode, de-rated parked DPF regeneration mode or service DPF regeneration mode once the amount of PM in the DPF is below RL2.
